# FASCICULE DE BREVET EUROPEEN

(11) **EP 2 895 335 B1**
(45) Date de publication et mention de la délivrance du brevet: **21.02.2018**
(21) Numéro de dépôt: 13762150.4
(22) Date de dépôt: 16.09.2013
(51) Int. Cl.: B60C 1/00, C08L 53/02, C08L 9/06

(54) **PNEUMATIQUE POURVU D'UNE BANDE DE ROULEMENT COMPRENANT UN ÉLASTOMÈRE THERMOPLASTIQUE ET DU NOIR DE CARBONE**
REIFEN MIT EINER LAUFFLÄCHE MIT EINEM THERMOPLASTISCHEN ELASTOMER UND RUSS
TIRE PROVIDED WITH A TREAD INCLUDING A THERMOPLASTIC ELASTOMER AND CARBON BLACK

(30) Priorité: 17.09.2012 FR 1258694
(43) Date de publication de la demande: 22.07.2015
(73) Titulaire: Compagnie Générale des Etablissements Michelin, 63000 Clermont-Ferrand (FR)
(72) Inventeur: CUSTODERO, Emmanuel, 63040 Clermont-Ferrand Cedex9 (FR); ABAD, Vincent, 63040 Clermont-Ferrand Cedex 9 (FR); LEMAL, Vincent, 63040 Clermont-Ferrand Cedex 9 (FR)
(74) Mandataire: Sidhu, Alban
(86) Numéro de dépôt international: PCT/EP2013/069154
(87) Numéro de publication internationale: WO 2014/041167

(56) Documents cités:
- WO-A1-2011/161222
- FR-A1- 2 947 275
- DATABASE WPI Week 200812 Thomson Scientific, London, GB; AN 2008-B65291 XP002695891, & JP 2007 332246 A (BRIDGESTONE CORP) 27 décembre 2007 (2007-12-27)
- DATABASE WPI Week 200355 Thomson Scientific, London, GB; AN 2003-580682 XP002695892, & JP 2003 012861 A (KANEKA CORP) 15 janvier 2003 (2003-01-15)
- DATABASE WPI Week 200064 Thomson Scientific, London, GB; AN 2000-658985 XP002695893, & JP 2000 256509 A (YOKOHAMA RUBBER CO LTD) 19 septembre 2000 (2000-09-19)
- DATABASE WPI Week 201240 Thomson Scientific, London, GB; AN 2012-G20028 XP002695894, & JP 2012 102269 A (SUMITOMO RUBBER IND LTD) 31 mai 2012 (2012-05-31)

## Description

La présente invention est relative aux pneumatiques munis d'une bande de roulement.

Dans un pneumatique conventionnel, la bande de roulement comprend des élastomères diéniques majoritairement.

Un objectif constant des manufacturiers de pneumatique est d'améliorer l'adhérence des pneumatiques sur sol mouillé. En parallèle, un autre objectif est de diminuer la résistance au roulement des pneumatiques. Cependant ces deux objectifs sont difficiles à concilier puisque l'amélioration de l'adhérence suppose d'augmenter les pertes hystérétiques tandis que l'amélioration de la résistance au roulement suppose de baisser les pertes hystérétiques. Il existe donc un compromis de performance à optimiser. En plus de ce compromis entre l'adhérence et la résistance au roulement, il est important que la composition des bandes de roulement permette une bonne résistance à l'usure.

Dans ce but, la demanderesse a trouvé de manière surprenante qu'un pneumatique pourvu d'une bande de roulement spécifique permettait d'obtenir un très bon compromis des performances en adhérence et en résistance au roulement, tout en possédant une bonne résistance à l'usure.

L'invention a pour objet un pneumatique comprenant une bande de roulement, un sommet avec une armature de sommet, deux flancs, deux bourrelets, une armature de carcasse ancrée aux deux bourrelets et s'étendant d'un flanc à l'autre, dans lequel la bande de roulement est à base d'au moins un élastomère thermoplastique, et de noir de carbone à un taux volumique compris dans un domaine allant de 5 à 30%, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

Préférentiellement, l'invention concerne un pneumatique tel que défini ci-dessus, dans lequel la masse moléculaire moyenne en nombre de l'élastomère thermoplastique est comprise entre 30 000 et 500 000 g/mol.

De préférence, l'invention concerne un pneumatique tel que défini ci-dessus dans lequel le ou les blocs élastomères du copolymère bloc sont choisis parmi les élastomères ayant une température de transition vitreuse inférieure à 25°C ; préférentiellement choisis dans le groupe constitué par les élastomères éthyléniques, les élastomères diéniques et leurs mélanges, plus préférentiellement parmi les élastomères éthyléniques, alternativement parmi les élastomères diéniques et plus particulièrement, parmi les élastomères diéniques issus de l'isoprène, du butadiène ou d'un mélange de ces derniers.

De préférence également, l'invention concerne un pneumatique tel que défini ci-dessus dans lequel le ou les blocs thermoplastiques du copolymère bloc sont choisis parmi les polymères ayant une température de transition vitreuse supérieure à 80°C, et, dans le cas d'un bloc thermoplastique semi cristallin, une température de fusion supérieure à 80°C ; et notamment, choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques et leurs mélanges ; plus préférentiellement choisi parmi les polystyrènes.

Très préférentiellement, l'invention concerne un pneumatique tel que défini ci-dessus dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Selon un mode de réalisation, l'invention concerne un pneumatique tel que défini ci-dessus, dans lequel l'élastomère thermoplastique est le seul élastomère de la bande de roulement.

Selon un autre mode de réalisation, l'invention concerne un pneumatique tel que défini ci-dessus, dans lequel la bande de roulement comprend en outre un élastomère non thermoplastique à un taux d'au plus 35 pce.

De préférence, l'invention concerne un pneumatique tel que défini ci-dessus, dans lequel le noir de carbone est présent à un taux volumique compris dans un domaine allant de 7 à 30%, de préférence de 10 à 25%.

Selon un mode préférentiel de réalisation, l'invention concerne un pneumatique tel que défini ci-dessus, dans lequel le noir de carbone est choisi parmi les noirs de carbone de surface spécifique BET supérieure à 80 m²/g, de préférence supérieure à 90 m²/g. Plus préférentiellement, le noir de carbone est un noir de carbone de surface spécifique BET supérieure à 120 m²/g.

De préférence, l'invention concerne un pneumatique tel que défini ci-dessus, dans lequel la composition de la bande de roulement comprend en outre un plastifiant, de préférence à un taux compris entre 5 et 85 pce. De préférence, le plastifiant est une résine plastifiante et/ou une huile plastifiante. Plus préférentiellement, l'huile est une huile paraffinique. De préférence également, le plastifiant est présent à un taux compris dans un domaine allant de 10 à 60 pce.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### 1. Composition de la bande de roulement

Le pneumatique selon l'invention a pour caractéristique essentielle de comprendre une bande de roulement, un sommet avec une armature de sommet, deux flancs, deux bourrelets, une armature de carcasse ancrée aux deux bourrelets et s'étendant d'un flanc à l'autre, dans lequel la bande de roulement est à base d'au moins un élastomère thermoplastique, et de noir de carbone à un taux volumique compris dans un domaine allant de 5 à 30%, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

### 1.1 Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et des blocs élastomères peut varier.

### 1.1.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour bande de roulement de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse étant relative à la partie élastomère du TPE, et la température la plus haute étant relative à la partie thermoplastique du TPE. Ainsi, les blocs souples des TPE se définissent par une Tg inférieure à la température ambiante (25°C), tandis que les blocs rigides ont une Tg supérieure à 80°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### 1.1.2. Nature des blocs élastomères

Les blocs élastomères du TPE pour les besoins de l'invention, peuvent être tous les élastomères connus de l'homme de l'art. Ils possèdent de préférence une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄ - C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle.

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en bande de roulement de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverse nature, notamment, ils peuvent constituer les blocs suivants ou leurs mélanges :
- les polyoléfines (polyéthylène, polypropylène)
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la bande de roulement peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en bande de roulement de pneumatique.

Le bloc thermoplastique peut également être constitué de plusieurs blocs thermoplastiques tels que définis ci-dessus.

### 1.1.4. Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la bande de roulement selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOL T 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous le dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### 1.1.5. Quantité de TPE

Si d'éventuels autres élastomères (non thermoplastiques) sont utilisés dans la composition, le ou les élastomères TPE constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères TPE représentent au moins 95% (en particulier 100%) en poids de l'ensemble des élastomères présents dans la composition élastomère.

Ainsi, la quantité d'élastomère TPE est comprise dans un domaine qui varie de 65 à 100 pce, préférentiellement de 70 à 100 pce et notamment de 75 à 100 pce. De manière préférentielle également, la composition contient de 95 à 100 pce d'élastomère TPE. Le ou les élastomères TPE sont préférentiellement le ou les seuls élastomères de la bande de roulement.

### 1.2 Elastomère Non Thermoplastique

Le ou les élastomères thermoplastiques décrits précédemment sont suffisants à eux seuls pour que soit utilisable la bande de roulement selon l'invention.

La composition de la bande de roulement selon l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux total d'élastomère non thermoplastique, optionnel, est compris dans un domaine variant de 0 à 35 pce, préférentiellement de 0 à 30 pce, plus préférentiellement de 0 à 25 pce, et plus préférentiellement encore de 0 à 5 pce. Ainsi, lorsque la bande de roulement en contient, les élastomères non thermoplastiques représentent au plus 35 pce, préférentiellement au plus 30 pce, plus préférentiellement au plus 25 pce et de manière très préférentielle au plus 5 pce. De manière très préférentielle également, la bande de roulement du pneumatique selon l'invention ne contient pas d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la bande de roulement du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Noir de carbone

La bande de roulement selon l'invention comprend également du noir de carbone.

Le taux volumique de noir de carbone dans la composition est compris dans un domaine de 5 à 30%, préférentiellement de 7 à 30 %, et plus préférentiellement encore de 10 à 25%. Ces taux volumiques correspondent au volume de charge par rapport au volume total de la composition. Par exemple, ils correspondent à un taux de 10 à 85 pce pour une composition sans plastifiant, préférentiellement de 15 pce à 85 pce et plus préférentiellement encore de 20 pce à 65 pce. Pour une composition avec 20 pce de plastifiant, ils correspondent à un taux de 12 à 100 pce, préférentiellement de 18 pce à 100 pce et plus préférentiellement encore de 25 pce à 80 pce. Au-delà de 30% de noir de carbone, l'hystérèse (et la résistance au roulement) de la composition de pneumatique est trop élevée et en-deçà de 5% de noir de carbone, la quantité de noir de carbone est trop faible pour permettre une bonne résistance à l'usure de la bande de roulement.

Selon un mode de réalisation préférentiel, la composition comprend de 30 à 120 pce de noir de carbone, plus préférentiellement de 40 à 95 pce et plus préférentiellement encore de 50 à 70 pce.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Selon un mode de réalisation préférentiel, on utilisera un noir de carbone de surface spécifique BET supérieure à 80 m²/g, plus préférentiellement supérieure à 90 m/g et plus préférentiellement encore supérieure à 120 m²/g. Précisons que la surface spécifique BET a été mesurée selon la norme ASTM D6556-09 [méthode multipoints (5 points) -gaz : azote-domaine de pression relative P/PO : 0,05 a 0,30] Convient également comme noir de carbone un mélange de noirs de carbone caractérisé en ce que le mélange de noirs de carbone a une surface spécifique BET supérieure à 80 m²/g, plus préférentiellement supérieure à 90 m/g et plus préférentiellement encore supérieure à 120 m²/g. Comme noirs de carbone convenant à ce mode de réalisation préférentiel, on peut citer les noirs de série inférieure ou égale à 300 (grade ASTM) tels que les noirs des séries 300, 200 ou 100, comme par exemple les noirs N115, N134, N234, N326, N330, N339, N347 ou N375 ; et plus préférentiellement les noirs des séries 100 et 200 tels que les noirs N115, N134 ou N234.

### 1.4. Plastifiants

L'élastomère thermoplastique décrit précédemment est suffisant à lui seul pour que soit utilisable la bande de roulement selon.

Toutefois, selon un mode de réalisation préférentiel de l'invention, la composition élastomère précédemment décrite peut comporter également, un agent plastifiant, tel qu'une huile (ou huile plastifiante ou huile d'extension) ou une résine plastifiante dont la fonction est de faciliter la mise en oeuvre de la bande de roulement, particulièrement son intégration au pneumatique par un abaissement du module, un ajustement de la température de transition vitreuse (Tg), et une augmentation du pouvoir tackifiant.

On peut utiliser toute huile, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

Par exemple, l'huile d'extension est choisie dans le groupe constitué par les huiles paraffiniques, telle qu'une huile paraffinique à basse viscosité (PABV).

Lorsqu'elle est utilisée, on préfère que le taux d'huile d'extension soit compris dans un domaine variant de plus de 0 à 100 pce, préférentiellement de 5 à 85 pce, plus préférentiellement de 10 à 60 pce selon la Tg et le module visés pour la bande de roulement.

L'homme du métier saura, à la lumière de la description et des exemples de réalisation qui suivent, ajuster la quantité de plastifiant en fonction de l'élastomère TPE utilisé (comme indiqué précédemment) et du taux de noir de carbone ; des conditions particulières d'usage du pneumatique muni de la bande de roulement, et notamment en fonction de l'objet pneumatique dans lequel elle est destinée à être utilisée.

### 1.5. Additifs divers

La bande de roulement décrite précédemment peut comporter par ailleurs les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique. De manière préférentielle, la bande de roulement ne contient pas tous ces additifs en même temps et de manière encore plus préférentielle, la sous-couche ne contient aucun de ces agents.

Egalement et à titre optionnel, la composition de la bande de roulement de l'invention peut contenir un système de réticulation connu de l'homme du métier. Préférentiellement, la composition ne contient pas de système de réticulation. De la même manière, la composition de la bande de roulement de l'invention peut contenir une ou plusieurs charges micrométriques, inertes telles que les charges lamellaires connues de l'homme de l'art. De préférence, la composition de contient pas de charge micrométrique.

Outre les élastomères précédemment décrits, la composition de la bande de roulement pourrait aussi comporter, toujours selon une fraction pondérale minoritaire par rapport à l'élastomère blocs, des polymères autres que des élastomères, tels que par exemple des polymères thermoplastiques. Lorsqu'ils sont présents dans la composition, on préfère que le taux total de polymères thermoplastiques non élastomériques soit inférieur à 40 pce, préférentiellement compris entre 5 et 30 pce, et plus préférentiellement compris entre 10 et 25 pce. Ces polymères thermoplastiques peuvent être notamment les polymères de poly(para-phénylène éther) (noté en abrégé "PPE"). Ces polymères thermoplastiques PPE sont bien connus de l'homme du métier, ce sont des résines solides à température ambiante (20°C) compatibles avec les polymères styréniques, qui ont notamment utilisées pour augmenter la Tg d'élastomères TPE dont le bloc thermoplastique est un bloc styrénique (voir par exemple *"*Thermal, Mechanical and Morphological Analyses of Poly(2,6-dimethyl-1,4-phenylene oxide)/Styrene-Butadiene-Styrene Blends", Tucker, Barlow and Paul, Macromolecules, 1988, 21, 1678-1685).

Outre le noir de carbone précédemment décrit, la composition peut aussi comporter d'autres charges, qu'elles soient renforçante ou non renforçante, telles que des charges renforçantes inorganiques (silice et/ou alumine), ou des charges inertes (craie par exemple).

### 2. Préparation

Les élastomères TPE peuvent être mis en oeuvre de façon classique pour des TPE, par extrusion ou moulage, par exemple à partir d'une matière première disponible sous la forme de billes ou de granulés.

La bande de roulement pour le pneumatique selon l'invention est préparée de façon classique, par exemple, par incorporation des différents composants dans une extrudeuse bi-vis, de façon à réaliser la fusion de la matrice et une incorporation de tous les ingrédients, puis utilisation d'une filière permettant de réaliser le profilé. La bande de roulement est ensuite sculptée dans le moule de cuisson du pneumatique.

Si le bloc élastomère du TPE est un bloc élastomère saturé, il pourra être nécessaire d'inclure au pneumatique une sous-couche ou couche d'adhésion sous la portion sculptée de la bande de roulement qui contiendra un TPE à bloc élastomère insaturé pour favoriser l'adhésion entre ladite bande de roulement et la couche adjacente (par exemple l'armature de sommet ou ceinture) au sein du pneumatique fini.

Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet. Optionnellement et comme indiqué précédemment, le pneumatique selon l'invention peut comprendre en outre une sous-couche ou une couche d'adhésion entre la portion sculptée de la bande de roulement et l'armature de sommet.

### EXEMPLES DE RÉALISATION DE L'INVENTION

Des compositions de bande de roulement pour pneumatique selon l'invention ont été préparées comme indiqué précédemment.

Des pneumatiques selon l'invention ont ensuite été préparés selon les méthodes habituelles, avec les constituants classiques connus de l'homme du métier : un sommet, deux flancs et deux bourrelets, une armature de carcasse ancrée aux deux bourrelets, une armature de sommet et une bande de roulement, la bande de roulement étant celle décrite pour les besoins de la présente invention.

Les propriétés des pneumatiques selon l'invention peuvent être évaluées par des tests effectués sur des pneumatiques ou à partir de tests sur des échantillons de composition de bande de roulement comme indiqué ci-après.

### Tests d'adhérence : Freinage sur sol humide, avec un système ABS

Les pneumatiques sont montés sur un véhicule automobile de marque Renault et de modèle Mégane 1.6 RTE, équipé d'un système de freinage ABS, et la distance nécessaire pour passer de 80 km/h à 10 km/h est mesurée lors d'un freinage brutal sur sol recouvert d'une épaisseur de 1mm d'eau (béton bitumineux). Une valeur inférieure à celle du témoin, arbitrairement fixée à 100, indique un résultat amélioré, c'est-à-dire une distance de freinage plus courte.

### Tests de mesure de résistance au roulement

La résistance au roulement des pneumatiques a été mesurée sur un volant, selon la méthode ISO 87-67 (1992). Les résultats présentés ci-dessous sont présentés en base 100 : une valeur arbitraire de 100 est donnée pour la résistance au roulement du témoin, un résultat inférieur à 100 indiquant une meilleure performance en résistance au roulement donc une diminution de la résistance au roulement.

### Tests de mesure de résistance à l'usure

La résistance à l'usure des pneumatiques a été mesurée par un essai dit de roulage sur circuit. Le circuit est parcouru dans des conditions permettant d'user les pneumatiques de manière reproductible entre le témoin et la solution testée : les véhicules évoluent en convoi, ce qui garantit que les pneumatiques sont soumis aux mêmes conditions de vitesse, d'accélérations, de température, et de nature des sols. Le circuit de roulage est parcouru jusqu'à atteindre une distance supérieure à 1000 km.

On considère le pneumatique avant droit du véhicule. Le pneumatique témoin et la solution testée sont pesés avant le roulage et après plus de 1000 km. La masse perdue par le témoin fixe une performance usure à 100 %. Une solution présentant une valeur supérieure à 100 représente un résultat amélioré, c'est-à-dire une masse perdue inférieure.

### EXEMPLE

Un pneumatique conforme à l'invention a été préparé comme indiqué précédemment et comparé à un pneumatique témoin muni d'une bande de roulement classique pour « Pneu vert » à basse résistance au roulement, et à une pneumatique similaire au pneumatique conforme à l'invention mais ne comprenant pas de charge renforçante. Les compositions de ces bandes de roulement sont présentées dans le tableau 1 ci-dessous.

**Tableau 1**

| Composition | A-1 | A-2 | A-3 |
|---|---|---|---|
| SBR (1) | 40 | 0 | 0 |
| SBR (2) | 60 | 0 | 0 |
| Elastomère TPE (3) | 0 | 100 | 100 |
| Charge (4) | 90 | 0 | 0 |
| Agent de couplage (5) | 7.5 | 0 | 0 |
| Noir de carbone (6) | 4 | 0 | 60 |
| Plastifiant liquide 1 (7) | 20 | 0 | 0 |
| Plastifiant liquide 2 (8) | 0 | 20 | 20 |
| Résine (9) | 20 | 0 | 0 |
| Cire anti-ozone | 1.5 | 0 | 0 |
| Agent anti-oxydant (10) | 2 | 0 | 0 |
| DPG (11) | 1.5 | 0 | 0 |
| ZnO (12) | 2.75 | 0 | 0 |
| Acide stéarique(13) | 2 | 0 | 0 |
| CBS (14) | 2.1 | 0 | 0 |
| Soufre | 1.4 | 0 | 0 |

| | | | |
|---|---|---|---|
| (1) SSBR solution (taux exprimés en SBR sec : 41% de styrène, 24 % des motifs polybutadiène en 1-2 et 51% des motifs polybutadiène en 1-4 trans (Tg = - 25°C) ; (2) SSBR solution (taux exprimés en SBR sec : 29% de styrène, 5 % des motifs polybutadiène en 1-2 et 80% des motifs polybutadiène en 1-4 trans (Tg = - 56°C) ; (3) Elastomère thermoplastique SIS « Hybrar 5125 » de la société Kuraray ; (4) Silice (« Zeosil 1165MP » de la société Rhodia) ; (5) agent de couplage TESTP (« Si69 » de la société Degussa) ; (6) Noir de carbone N234 ; (7) Huile TDAE « Vivatec 500 » de la société Hansen & Rosenthal (8) Huile paraffinique « Extensoil 51 24T » de la société Repsol, ou « Tudalen 1968 » de la société Klaus Dahleke ; (9) Résine C5/C9 « CrayValley Wingtack » de la société STS (10) N-1,3-diméthylbutyl-N-phénylparaphénylènediamine (« Santoflex 6-PPD » de la société Flexsys) ; (11) DPG = Diphénylguanidine (« Perkacit DPG » de la société Flexsys) ; (12) oxyde de zinc (grade industriel - société Umicore) ; (13) stéarine (« Pristerene » de la société Uniquema); (14) N-cyclohexyl-2-benzothiazyl-sulfénamide (« Santocure CBS » de la société Flexsys) ; | | | |

On peut noter dans ces compositions la grande économie de moyens, liée à l'utilisation d'élastomères TPE dans la composition de la bande de roulement.

Les performances de l'invention ont ensuite été évaluées en pneu (205/55 R16). A cette fin, un pneumatique B3 muni d'une bande de roulement de composition A3 conforme à l'invention a été comparée à un témoin B2 muni d'une bande de roulement de composition A2, lui-même comparé à un pneumatique B1 muni d'une bande de roulement de composition A1. Ces pneumatiques ont été évalués en test d'adhérence en condition de freinage, de résistance au roulement et en résistance à l'usure. Les résultats sont présentés dans les tableaux 2 et 3.

**Tableau 2**

| Pneumatique | B-1 | B-2 |
|---|---|---|
| Formulation de la bande de roulement | A-1 | A-2 |
| Distance de freinage (base 100) | 100 | 83 |
| Résistance au roulement (base 100) | 100 | 97 |

**Tableau 3**

| Pneumatique | B-2 | B-3 |
|---|---|---|
| Formulation de la bande de roulement | A-2 | A-3 |
| Distance de freinage (base 100) | 100 | 110 |
| Résistance au roulement (base 100) | 100 | 135 |
| Résistance à l'usure (base 100) | 100 | 1750 |

Les résultats présentés aux tableaux 2 et 3 mettent en évidence que la bande de roulement de composition A3 selon l'invention permet une amélioration très forte de la résistance à l'usure en conservant des propriétés acceptables d'adhérence sur sol mouillé et de la résistance au roulement. Par ailleurs, il est très surprenant au vu de l'état de la technique, que l'élastomère TPE, une charge renforçante et un éventuel plastifiant, soient suffisants à eux seuls dans la composition pour que la bande de roulement soit utilisable dans un pneumatique dont les performances, sont, de plus, améliorées.

## Revendications

1. Pneumatique comprenant une bande de roulement, un sommet avec une armature de sommet, deux flancs, deux bourrelets, une armature de carcasse ancrée aux deux bourrelets et s'étendant d'un flanc à l'autre, **caractérisé en ce que** la bande de roulement est à base d'au moins un élastomère thermoplastique, et de noir de carbone à un taux volumique compris dans un domaine allant de 5 à 30%, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

2. Pneumatique selon la revendication 1, dans lequel la masse moléculaire moyenne en nombre de l'élastomère thermoplastique est comprise entre 30 000 et 500 000 g/mol.

3. Pneumatique selon l'une des revendications 1 ou 2 dans lequel le ou les blocs élastomères du copolymère bloc sont choisis parmi les élastomères ayant une température de transition vitreuse inférieure à 25°C.

4. Pneumatique l'une quelconque des revendications précédentes dans lequel le ou les blocs élastomères du copolymère bloc sont choisis dans le groupe constitué par les élastomères éthyléniques, les élastomères diéniques et leurs mélanges.

5. Pneumatique l'une quelconque des revendications précédentes dans lequel le ou les blocs élastomères du copolymère bloc sont choisis parmi les élastomères éthyléniques.

6. Pneumatique l'une quelconque des revendications précédentes dans lequel le ou les blocs élastomères du copolymère bloc sont choisis parmi les élastomères diéniques.

7. Pneumatique la revendication 6 dans lequel le ou les blocs élastomères du copolymère bloc sont des élastomères diéniques issus de l'isoprène, du butadiène ou d'un mélange de ces derniers.

8. Pneumatique selon l'une quelconque des revendications précédentes dans lequel le ou les blocs thermoplastiques du copolymère bloc sont choisis parmi les polymères ayant une température de transition vitreuse supérieure à 80°C, et, dans le cas d'un bloc thermoplastique semi cristallin, une température de fusion supérieure à 80°C.

9. Pneumatique selon l'une quelconque des revendications précédentes dans lequel le ou les blocs thermoplastiques du copolymère bloc sont choisis parmi les polystyrènes.

10. Pneumatique selon l'une quelconque des revendications précédentes dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

11. Pneumatique selon l'une quelconque des revendications précédentes, dans lequel le ou les élastomères thermoplastiques sont les seuls élastomères de la bande de roulement.

12. Pneumatique selon l'une quelconque des revendications 1 à 10, dans lequel la bande de roulement comprend en outre un ou plusieurs élastomères non thermoplastiques à un taux total d'au plus 35 pce.

13. Pneumatique selon l'une quelconque des revendications précédentes, dans lequel le noir de carbone est présent à un taux compris dans un domaine allant de 7 à 30%, de préférence de 10 à 25%.

14. Pneumatique selon l'une quelconque des revendications précédentes, dans lequel le noir de carbone est choisi parmi les noirs de carbone de surface spécifique BET supérieure à 80 m²/g, de préférence supérieure à 90 m/g.

15. Pneumatique selon l'une quelconque des revendications précédentes dans lequel la composition de la bande de roulement comprend en outre un plastifiant, de préférence à un taux compris entre 5 et 85 pce.

## Patentansprüche

1. Reifen, umfassend eine Lauffläche, einen Scheitel mit einer Scheitelbewehrung, zwei Seitenflächen, zwei Wülste, eine Karkassenbewehrung, die in den beiden Wülsten verankert ist und sich von einer Seitenfläche zur anderen erstreckt, **dadurch gekennzeichnet, dass** die Lauffläche auf mindestens einem thermoplastischen Elastomer und Ruß in einem Volumengehalt in einem Bereich von 5 bis 30 % basiert, wobei es sich bei dem thermoplastischen Elastomer um ein Blockcopolymer mit mindestens einem Elastomerblock und mindestens einem thermoplastischen Block handelt und der Gesamtgehalt an thermoplastischem Elastomer in einem Bereich von 65 bis 100 phe (Gewichtsteile pro hundert Teile Elastomer) liegt.

2. Reifen nach Anspruch 1, wobei das zahlenmittlere Molekulargewicht des thermoplastischen Elastomers zwischen 30.000 und 500.000 g/mol liegt.

3. Reifen nach einem der Ansprüche 1 oder 2, wobei der Elastomerblock bzw. die Elastomerblöcke des Blockcopolymers aus Elastomeren mit einer Glasübergangstemperatur von weniger als 25 °C ausgewählt ist bzw. sind.

4. Reifen einem der vorhergehenden Ansprüche, wobei der Elastomerblock bzw. die Elastomerblöcke des Blockcopolymers aus der Gruppe bestehend aus Ethylen-Elastomeren, Dien-Elastomeren und Mischungen davon ausgewählt ist bzw. sind.

5. Reifen einem der vorhergehenden Ansprüche, wobei der Elastomerblock bzw. die Elastomerblöcke des Blockcopolymers aus Ethylen-Elastomeren ausgewählt ist bzw. sind.

6. Reifen einem der vorhergehenden Ansprüche, wobei der Elastomerblock bzw. die Elastomerblöcke des Blockcopolymers aus Dien-Elastomeren ausgewählt ist bzw. sind.

7. Reifen Anspruch 6, wobei es sich bei dem Elastomerblock bzw. den Elastomerblöcken des Blockcopolymers um Dien-Elastomere aus Isopren, Butadien oder einer Mischung davon handelt.

8. Reifen nach einem der vorhergehenden Ansprüche, wobei der thermoplastische Block bzw. die thermoplastischen Blöcke des Blockcopolymers aus Polymeren mit einer Glasübergangstemperatur von mehr als 80 °C und im Fall eines teilkristallinen thermoplastischen Blocks einer Schmelztemperatur von mehr als 80 °C ausgewählt ist bzw. sind.

9. Reifen nach einem der vorhergehenden Ansprüche, wobei der thermoplastische Block bzw. die thermoplastischen Blöcke des Blockcopolymers aus Polystyrolen ausgewählt ist bzw. sind.

10. Reifen nach einem der vorhergehenden Ansprüche, wobei der thermoplastische Block bzw. die thermoplastischen Blöcke aus der Gruppe bestehend aus thermoplastischen Styrol/Butadien(SB)-, Styrol/Isopren(SI)-, Styrol/Butadien/Isopren(SBI)-, Styrol/Butadien/Styrol(SBS)-, Styrol/Isopren/Styrol(SIS)-, Styrol/Butadien/Isopren/Styrol(SBIS)-Elastomeren und Mischungen dieser Copolymere ausgewählt ist bzw. sind.

11. Reifen nach einem der vorhergehenden Ansprüche, wobei es sich bei dem thermischen Elastomer bzw. den thermoplastischen Elastomeren um die einzigen Elastomere der Lauffläche handelt.

12. Reifen nach einem der Ansprüche 1 bis 10, wobei die Lauffläche außerdem ein oder mehrere nicht thermoplastische Elastomere in einem Gesamtgehalt von höchstens 35 phe umfasst.

13. Reifen nach einem der vorhergehenden Ansprüche, wobei der Ruß in einem Gehalt in einem Bereich von 7 bis 30 %, vorzugsweise 10 bis 25 %, vorliegt.

14. Reifen nach einem der vorhergehenden Ansprüche, wobei der Ruß aus Rußen mit einer spezifischen BET-Oberfläche von mehr als 80 m²/g, vorzugsweise mehr als 90 m²/g, ausgewählt ist.

15. Reifen nach einem der vorhergehenden Ansprüche, wobei die Zusammensetzung der Lauffläche außerdem einen Weichmacher, vorzugsweise in einem Gehalt zwischen 5 und 85 phe, umfasst.

## Claims

1. Tyre comprising a tread, a crown with a crown reinforcement, two sidewalls, two beads and a carcass reinforcement anchored to the two beads and extending from one sidewall to the other, **characterized in that** the tread is based on at least one thermoplastic elastomer and on carbon black at a content by volume within a range extending from 5% to 30%, the said thermoplastic elastomer being a block copolymer comprising at least one elastomer block and at least one thermoplastic block, and the total content of thermoplastic elastomer being within a range varying from 65 to 100 phr (parts by weight per hundred parts of elastomer).

2. Tyre according to Claim 1, in which the number-average molecular weight of the thermoplastic elastomer is between 30 000 and 500 000 g/mol.

3. Tyre according to either of Claims 1 and 2, in which the elastomer block or blocks of the block copolymer are chosen from elastomers having a glass transition temperature of less than 25°C.

4. Tyre any one of the preceding claims, in which the elastomer block or blocks of the block copolymer are selected from the group consisting of ethylene elastomers, diene elastomers and their mixtures.

5. Tyre any one of the preceding claims, in which the elastomer block or blocks of the block copolymer are chosen from ethylene elastomers.

6. Tyre any one of the preceding claims, in which the elastomer block or blocks of the block copolymer are chosen from diene elastomers.

7. Tyre Claim 6, in which the elastomer block or blocks of the block copolymer are diene elastomers resulting from isoprene, butadiene or a mixture of the latter.

8. Tyre according to any one of the preceding claims, in which the thermoplastic block or blocks of the block copolymer are chosen from polymers having a glass transition temperature of greater than 80°C and, in the case of a semicrystalline thermoplastic block, a melting point of greater than 80°C.

9. Tyre according to any one of the preceding claims, in which the thermoplastic block or blocks of the block copolymer are chosen from polystyrenes.

10. Tyre according to any one of the preceding claims, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/isoprene/styrene (SIS) and styrene/butadiene/isoprene/styrene (SBIS) thermoplastic elastomers and the mixtures of these copolymers.

11. Tyre according to any one of the preceding claims, in which the thermoplastic elastomer or elastomers are the only elastomers of the tread.

12. Tyre according to any one of Claims 1 to 10, in which the tread additionally comprises one or more non-thermoplastic elastomers at a total content of at most 35 phr.

13. Tyre according to any one of the preceding claims, in which the carbon black is present at a content within a range extending from 7% to 30%, preferably from 10% to 25%.

14. Tyre according to any one of the preceding claims, in which the carbon black is chosen from carbon blacks with a BET specific surface of greater than 80 m²/g, preferably of greater than 90 m²/g.

15. Tyre according to any one of the preceding claims, in which the composition of the tread additionally comprises a plasticizer, preferably at a content of between 5 and 85 phr.
